Europäisches Patentamt

European Patent Office

Office européen des brevets

(19)

(11) Numéro de publication: **0 198 761 B1**

(12)

# FASCICULE DE BREVET EUROPEEN

(45) Date de publication de fascicule du brevet: **26.05.93**

(51) Int. Cl.⁵: **G02B 6/28**, C03B 37/025, C03C 25/02

(21) Numéro de dépôt: **86400706.7**

(22) Date de dépôt: **02.04.86**

(54) **Dispositif coupleur optique, application à un joint tournant pour liaisons par fibres optiques et procédé de fabrication.**

(30) Priorité: **05.04.85 FR 8505256**

(43) Date de publication de la demande:
**22.10.86 Bulletin 86/43**

(45) Mention de la délivrance du brevet:
**26.05.93 Bulletin 93/21**

(84) Etats contractants désignés:
**DE GB IT NL**

(56) Documents cités:
FR-A- 2 458 956      FR-A- 2 484 742
FR-A- 2 490 045      GB-A- 1 011 570
GB-A- 1 427 826      US-A- 4 134 642
US-A- 4 351 658

**PATENT ABSTRACTS OF JAPAN**, vol. 7, no.
101 (P-194)[1246], 28 avril 1983, page 38 P
194; & JP - A - 58 24 110

**PATENT ABSTRACTS OF JAPAN**, vol. 6, no.
133 (P-129)[1011], 20 juillet 1982; & JP - A
- 57 56 814

**OPTICAL COMMUNICATIONS CONFERENCE,**
**Amsterdam, NL, 17-19 septembre 1979, pa-**

ges 5.6-1 - 5.6-4; M. SATO et al.: "Double
layer silicone coating with double cone
nozzle in-line with optical fiber drawing"

**PATENT ABSTRACTS OF JAPAN**, vol. 7, no.
210 (P-223)[1355], 16 septembre 1983, page
113 P 223; & JP - A - 58 105 203

(73) Titulaire: **THOMSON-CSF**
**51, Esplanade du Général de Gaulle**
**F-92800 Puteaux(FR)**

(72) Inventeur: **D'Auria, Luigi**
**THOMSON-CSF SCPI 19, avenue de Messi-**
**ne**
**F-75008 Paris(FR)**
Inventeur: **Gazard, Maryse**
**THOMSON-CSF SCPI 19, avenue de Messi-**
**ne**
**F-75008 Paris(FR)**

(74) Mandataire: **Lepercque, Jean et al**
**THOMSON-CSF SCPI**
**F-92045 PARIS LA DEFENSE CEDEX 67 (FR)**

## Description

L'invention concerne un joint tournant destiné à des liaisons par fibres optiques, pour lesquels il est nécessaire d'établir, au moins, des transmissions selon une architecture de type étoile.

L'invention s'applique avantageusement aux radars et plus particulièrement à certains types d'antennes de radar à balayage électronique. Pour ce type d'antennes, on associe une déviation électronique du faisceau, dans un cône d'axe perpendiculaire au plan de l'antenne et passant par son centre, avec une rotation mécanique de l'aérien. La déviation électronique est obtenue en commandant l'état de phase de modules déphaseurs situés sur la face avant du plan de l'antenne. L'ordre de grandeur du nombre de modules déphaseurs est de un millier.

La phase de chaque module déphaseur est calculée, puis affichée par un ensemble de circuits de calcul situés sur la partie tournante de l'antenne. Les données sont élaborées par un calculateur central du radar situé dans la partie fixe de celui-ci. Il est donc nécessaire de transmettre ces informations à un ensemble mobile : la partie tournante, et de recevoir en retour des informations de contrôle en provenance des modules déphaseurs. Ces échanges s'effectuent, dans les systèmes les plus anciens, par l'intermédiaire d'un joint tournant constitué par un collecteur à bagues et par l'intermédiaire de liaisons électriques. Ce collecteur à bagues est lourd et encombrant car, en plus des bagues destinées à la transmission des signaux d'information, il comprend des bagues de transmission de courants forts. En outre, de nombreuses précautions doivent être prises pour assurer la sécurité des transmission : contact par plusieurs balais, répartition judicieuse des bagues, etc...

Toutes ces précautions ont pour effet, entre autre, de limiter le débit possible d'échange d'informations. Les cadences de transmission sont en général limitées à 1 Mbits/s, les transmissions s'effectuant en général par échange de signaux de type impulsionnel. Ceci conduit à dédoubler les voies de communications : une voie "montante" unidirectionnelle pour la liaison calculateur central-unités périphériques et une voie "descendante" unidirectionnelle pour la liaison inverse.

Pour pallier ces inconvénients, il a été proposé des systèmes de liaisons utilisant des fibres optiques pour assurer l'échange bidirectionnel de données entre le calculateur central et l'ensemble des circuits de calcul situé dans la partie tournante de l'antenne. L'utilisation de liaisons optiques a pour avantage de rendre ces liaisons insensibles au parasitage et aux "crachements" des bagues de puissance. En outre, une défaillance mécanique du collecteur ne peut entraîner la destruction des circuits électroniques et les cadences de transmission peuvent atteindre 10 Mbits/s ou plus.

Un système de liaison de ce type a fait l'objet d'une Demande de Brevet français FR-A-2 458 956. Un tel système est également décrit dans la conférence de RICHIN et al : "Liaisons optiques à courte distance utilisant des joints tournantes" paru dans "8th European Conference on Optical Communication" ; 21-24 Septembre 1983, pages 325-330.

Ces divulgations concernent un système de liaisons dont l'architecture autorise une répartition particulière des circuits électroniques entre la partie tournante et la partie fixe de l'antenne allant dans le sens d'une simplification des circuits électroniques situés sur la partie tournante, plus difficilement accessibles pour la mise au point et la maintenance. D'autre part, les cadences de transmission permettent d'utiliser une voie principale de transmission bidirectionnelle.

Par ailleurs, on connaît des coupleurs permettant des transmissions bidirectionnelles dans des voies optiques séparées comme cela est décrit dans les documents : US-A-4 134 642, FR-A-2 484 742 et FR-A-2 490 045.

Le système comprend notamment un joint tournant intégré dans la voie de communication principale. Celle-ci est donc divisée en deux parties. Les éléments optiques des deux parties sont des fibres optiques mélangeuses permettant un couplage étoile avec la partie tournante de l'antenne.

De ce cadre d'applications, il peut être également nécessaire d'établir, outre des liaisons conversationnelles de type étoile, une liaison supplémentaire, point à point, à très haut débit.

Le besoin se fait donc sentir de disposer d'un coupleur optique multifonction assurant simultanément et indépendamment une liaison optique conversationnelle : fonction coupleur étoile, et une liaison, point à point, à très haut débit : fonction transmission.

L'invention a donc pour un joint tournant pour des liaisons par fibres optiques entre des premier et second ensembles en mouvement de rotation relatif autour d'un axe, caractérisé en ce qu'il comprend des premier et second dispositifs coupleurs optiques cylindriques comprenant chacun une première structure guidante comportant une première et une seconde régions coaxiales s'étendant parallèlement à l'axe de symétrie dudit dispositif coupleur, la première région étant destinée à être couplée à une liaison unique par fibre optique, par au moins une face terminale orthogonale audit axe, la seconde région entourant cette première région et formant gaine optique ; et une seconde structure guidante disposée en périphérie comprenant des troisième et quatrième régions annulaires, la troisième région formant un coupleur étoile, par au moins une face terminale annulaire orthogonale audit axe, pour plusieurs liaisons à fibres optiques, la quatrième région entourant cette troisième région et formant gaine optique ; ces coupleurs ayant des axes de symétrie communs audit axe de rotation et disposés de manière à ce que les première régions et les troisièmes régions de chacun desdits coupleurs soient couplés optiquement entre elles par une de leurs faces terminales, orthogonales à l'axe de rotation, les premier et second coupleurs optiques étant couplés mécaniquement chacun à un desdits premier et second ensembles.

D'autres particularités et avantages de l'invention apparaîtront à la lecture de la description qui suit au regard des figures annexées et parmi lesquelles :
- la figure 1 est un dispositif coupleur optique ;
- les figures 2 et 3 sont des diagrammes d'indices de réfraction optique relatifs à un tel coupleur ;
- la figure 4 illustre une étape particulière du procédé de fabrication selon une première variante ;
- la figure 5 illustre une étape particulière du procédé de fabrication selon une deuxième variante ;
- la figure 6 illustre une étape particulière du procédé de fabrication selon une troisième variante ;
- les figures 7 et 8 illustrent l'application d'un coupleur à la constitution d'un joint tournant optique selon l'invention.

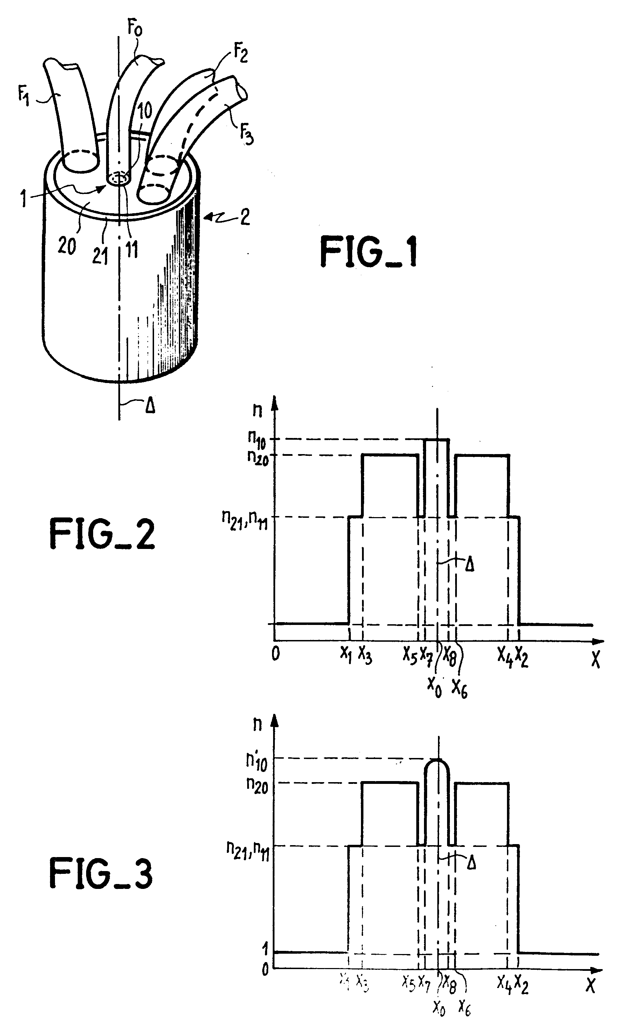

La figure 1 représente schématiquement un coupleur optique. Comme il vient d'être rappelé, le coupleur doit offrir la possibilité, tout à la fois et indépendamment, d'établir des liaisons conversationnelles de type étoile et une liaison point à point.

Pour ce faire le coupleur est constitué d'un élément optique cylindrique comprenant une partie centrale 1 jouant le rôle d'une fibre optique, assurant la transmission point à point, et une partie périphérique 2, coaxiale, jouant le rôle d'un coupleur étoile. Il comprend donc deux structures guidantes, chacune comportant deux régions.

La partie centrale 1 comprend un coeur 10 et une gaine optique 11. De même, la partie périphérique comprend une première région 20, formant guide de l'onde lumineuse, et une gaine optique 21.

La région centrale 1, plus particulièrement par son coeur 10, est destinée à être couplée optiquement à une seule fibre optique $F_0$. La partie périphérique est destinée à être couplée à au moins deux autres fibres optiques et, généralement, à un nombre plus important de fibres optique. Elle assure alors également le mélange des ondes lumineuses reçues de ces fibres optiques.

A titre d'illustration, il a été représenté trois fibres optiques $F_1$ à $F_3$.

L'axe de symétrie de l'ensemble est un axe $\triangle$, également axe optique du guide 1.

La figure 2 représente le profil d'indices de refraction du coupleur selon une variante préférée de l'invention.

Sur l'axe vertical ont été reportées les valeurs de l'indice de refraction n des différentes régions par rapport à l'air ambiant extérieur au coupleur pour lequel n = 1 (indice de l'air).

L'axe horizontal OX est confondu avec un diamètre de la section du coupleur et est orthogonal à l'axe $\triangle$, axe de symétrie du coupleur.

Sur cet axe ont été portées les abscisses des intersections des enveloppes extérieures des différentes régions avec celui-ci : $X_1$ et $X_2$ pour la gaine 21, $X_3$ et $X_4$ pour la structure guidante 20, $X_5$ et $X_5$ pour la gaine optique 11, $X_7$ et $X_5$ pour la région de coeur 10 et $X_0$ l'abscisse de l'axe $\triangle$.

Les indices de réfraction $n_{10}$ à $n_{21}$ des régions 10 à 21 vérifient les relations :

$$n_{10} > n_{20} > n_{11} > 1 \qquad (1)$$

$$n_{10} > n_{20} > n_{21} > 1 \qquad (2)$$

Dans une variante préférée, représentée sur la figure 2, $n_{11} = n_{21}$.

Le profil d'indice du coupleur, selon la figure 2, est du type à saut d'indice : valeurs constantes des indices de chaque région.

Dans une variante de réalisation supplémentaire, le coeur peut être du type à gradient d'indice. Cette variante est illustrée par la figure 3.

A l'exception du profil d'indice du coeur 10, de valeur maximale $n'_{10}$, les autres éléments sont identiques à ceux représentés sur la figure 2 et ne nécessitent pas une nouvelle description.

Le procédé de fabrication d'un dispositif va maintenant être explicité dans ses différentes variantes.

Selon une première variante de réalisation, le procédé comprend les étapes suivantes :
- Une étape de réalisation d'une préforme pleine en mettant en oeuvre une technique classique de fabrication, par exemple la technique dite "M.C.V.D" (dépôt modifié en phase gazeuse). Le diamètre extérieur de la préforme est typiquement égal à 1,25mm.
- Une étape de réalisation d'une préforme comportant une cavité centrale de section circulaire d'un diamètre déterminé.

Dans l'exemple illustré, avec la préforme pleine de diamètre extérieur 1,25 mm, le diamètre de la cavité est typiquement égal à 1,3 mm. La préforme a un diamètre extérieur typique de 10 mm. Cette préforme peut être réalisée également en mettant en oeuvre les techniques classiques, par exemple la technique "M.C.V.D." précitée. La réalisation d'une préforme comporte une phase de rétreint. On effectue, selon une première méthode, un retreint incomplet pour obtenir ladite cavité centrale. Selon une seconde méthode, le retreint est effectué de façon classique jusqu'à l'obtention d'un barreau plein et, dans une étape ultérieure, on réalise la cavité centrale par perçage. Cette méthode est cependant plus délicate à mettre en oeuvre.

Chaque préforme comporte deux régions coaxiales qui formeront les différentes régions du coupleur (figures 1, 10, 11, 20, 21).

- Une étape d'insertion de la préforme pleine dans le canal central de préforme creuse.
- Une étape de fibrage de l'ensemble de façon à obtenir une fibre optique composite. Cette fibre peut naturellement être découpée en tronçons pour constituer des coupleurs optiques selon l'invention, de longueurs voulues. Le diamètre extérieur de cette fibre est typiquement égal à 1 mm. La fibre optique centrale (figure 1 : 1) a alors un diamètre extérieur typique de 125 micromètres.

Cette variante de réalisation du procédé présente l'avantage d'assurer une bonne adhérence de la fibre centrale avec la structure guidante concentrique.

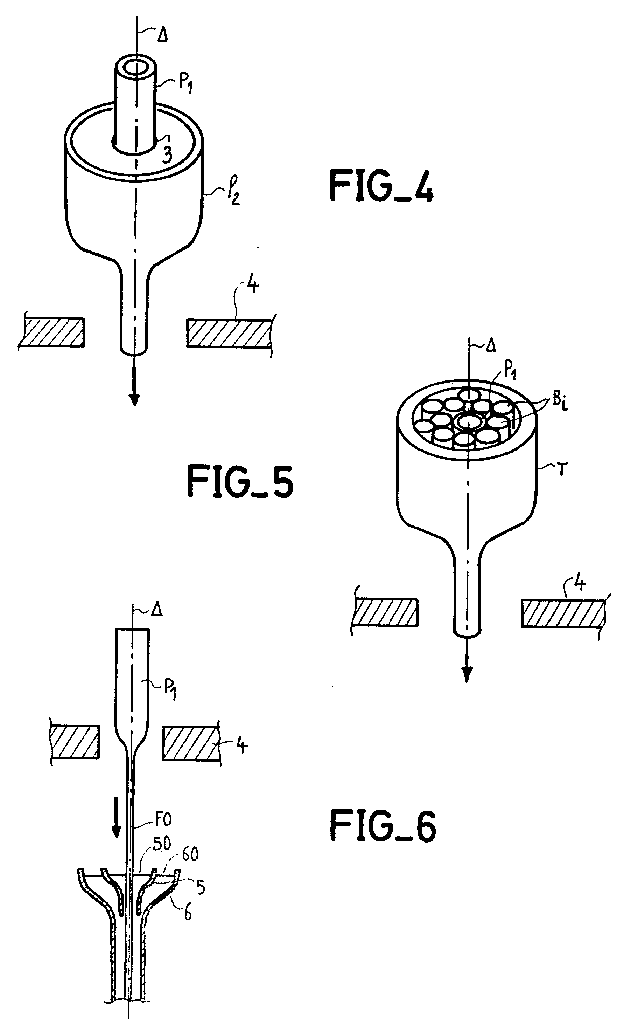

La figure 4 illustre schématiquement l'étape finale de fibrage.

La préforme pleine $P_1$ est insérée dans la cavité centrale 3 de la préforme creuse $P_2$. L'ensemble est passé dans un four 4 ramolissant les matériaux des préformes $P_1$ et $P_2$ et étiré suivant un axe $\Delta$, axe de symétrie des deux préformes.

Les matériaux de base et dopants habituellement utilisés dans les dispositifs de l'Art Connu sont naturllement utilisables également dans le cadre de l'invention. Le matériau de base est de manière préférentielle de la silice. La nature des dopants et leur quantité sont sélectionnés pour obtenir un profil d'indice déterminé, par exemple celui illustré sur les figures 2 et 3.

Selon une deuxième variante du procédé de fabrication, les deuxième et troisième étapes sont remplacées par les étapes suivantes:

- Une étape de fabrication de barreaux pleins, de préférence en silice, dopée ou non.
- Une étape d'insertion de ces barreaux ainsi que la préforme pleine réalisée pendant la première étape dans un tube en silice. La préforme pleine est disposée suivant l'axe de symétrie dudit tube et les barreaux pleins sont disposés tout autour de cette préforme de manière à remplir l'espace laissé vacant entre celle-ci et la paroi interne du tube en silice.

Comme précédemment, l'étape finale est une étape de fibrage de l'ensemble.

Cette étape est illustrée par la figure 5. La préforme $P_1$ occupe la région centrale. Cette préforme est entourée par des barreaux $B_i$ de silice, dopée ou non. Ces barreaux $B_i$ et la préforme $P_1$ sont insérés dans un tube en silice T.

Ce tube T, avec les barreaux $B_i$ et la préforme $P_1$, est alors passé dans un four 4 et subit un étirement suivant une direction parallèle à l'axe $\Delta$, axe de symétrie du tube T.

Selon une troisième variante, le procédé de fabrication comprend les étapes suivantes :

- Une étape de fabrication d'une préforme pleine $P_1$ comme dans les variantes précédemment décrites.
- Une étape de fibrage de cette préforme pleine pour obtenir une fibre optique.
- Une étape de gainage de cette fibre optique par une double enveloppe en silice dopée. Pour ce faire, on peut mettre en oeuvre la technique verrière classique. La fibre optique passe dans de la silice en fusion, dopée avec un dopant adéquat. Il peut s'agir, par exemple, d'oxyde de Bore : $B_2O_3$. Le point de ramollissement de la fibre optique est supérieur au point de fusion de la silice dopée.

On peut également revêtir la fibre optique par un autre matériau, par exemple certains copolymères dont les propriétés optiques : indice de réfraction, atténuation, etc..., sont adaptées à l'application envisagée.

Dans une variante préférée, les étapes de fibrage et de gainage sont effectuées en ligne sur un tour de fibrage comme illustré par la figure 6.

La préforme $P_1$ passe dans un four 4 et subit un étirement parallèle à l'axe de symétrie $\Delta$ de celle-ci, pour devenir une fibre optique FO qui, à son tour, traverse deux creusets concentriques 5 et 6, contenant l'un, de la silice dopée 50 en fusion, l'autre, de la silice 60 en fusion. Cette double enveloppe constitue les régions externes 20 et 21 (figure 2) du coupleur.

Les épaisseurs de ces régions ainsi que leurs diamètres relatifs dépendent des diamètres respectifs des orifices de sortie des creusets.

Comme il a été rappelé, le dispositif coupleur une application avantageuse comme élément constituant d'un joint tournant selon l'invention pour des transmissions par fibres optiques comprenant, simultanément, des liaisons conversationnelles (fonction coupleur étoile) et une liaison point à point par sa structure guidante centrale. En particulier un tel joint tournant peut être utilisé dans un système radar comprenant une antenne tournante.

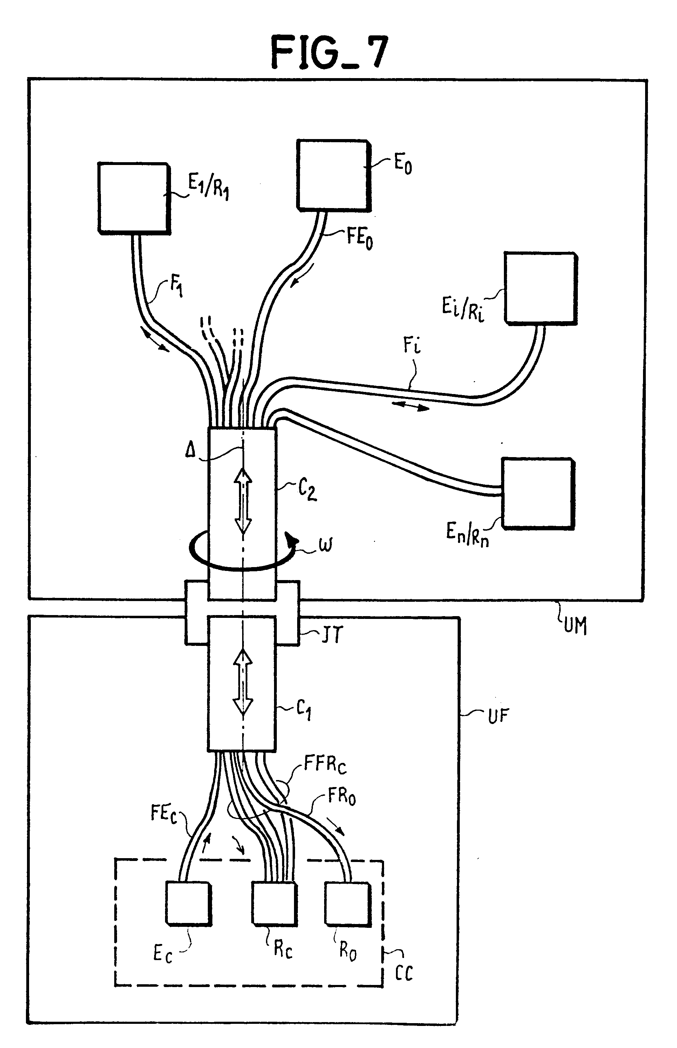

La figure 7 illustre une telle application.

Sur la figure 7 est représentée l'architecture d'un système de liaison optique comportant un joint tournant Jt. Le système est divisé en deux parties principales : un ensemble fixe UF comprenant notamment un calculateur central CC et un ensemble mobile UM animé d'un mouvement de rotation ω. Ce dernier ensemble comprend prend des terminaux périphériques comportant des émetteurs – récepteurs de lumière $E_i/R_i$.

L'indice i pouvant varier de 1 à n, n étant égal à 12 dans une application typique.

Le calculateur central CC comprend un émetteur $E_C$ et un récepteur $R_C$.

Le système de liaison proprement dit se divise lui – même en trois parties principales :
- des fibres de liaison $F_1$ à $F_n$ dans l'ensemble mobile UM et $FE_C$ et $FFR_C$ dans l'ensemble fixe ;
- et un joint optique tournant JT, comportant deux coupleurs respectivement $C_2$ et $C_1$.

La liaison réalisée par le système de l'invention est bidirectionnelle à l'alternance entre l'unité centrale CC et les unités émettrices – réceptrices $E_i/R_i$. L'information émise par l'émetteur $E_C$ du calculateur central CC peut être renvoyée simultanément à tous les terminaux périphériques et détectée par les récepteurs $R_i$.

L'information émise par chaque terminal périphérique peut être envoyée par l'intermédiaire de l'émetteur $E_i$ au calculateur central CC et détectée par le récepteur $R_C$. Lorsque deux périphériques veulent communiquer entre eux, ils peuvent le faire en passant par le calculateur central CC. Pour ce faire, on peut, par exemple, en associant une mémoire tampon à l'unité centrale CC, utiliser les techniques bien connues dites de "boîte aux lettres", ou tout autre procédé qui sort du cadre de l'invention.

De façon plus précise, si l'on se reporte à nouveau à la figure 1, chaque coupleur optique, $C_1$ et $C_2$, comporte une structure guidante centrale de coeur 10 et une structure guidante annulaire, plus particulièrement par la région 20.

Dans l'exemple illustré sur la figure 7, les fibres optiques $F_1$ à $F_n$ sont couplées optiquement par une de leurs extrémités à la région 20 de la structure guidante annulaire du coupleur optique $C_2$.

Les fibres optiques réceptrices $FFR_C$, qui sont regroupées en un faisceau de fibres, sont couplées optiquement également, par une de leurs extrémités, à la région 20 de la structure guidante annulaire du coupleur optique $C_1$, ainsi d'ailleurs que la fibre optique émettrice $FE_C$. Dans l'exemple illustré, le faisceau $FFR_C$ comprend onze fibres optiques.

Les autres extrémités de ces fibres optiques sont couplées optiquement, respectivement, aux terminaux $E_i/R_i$, au récepteur $R_C$ et à l'émetteur $E_C$.

Les faces terminales en vis – à – vis des coupleurs $C_1$ et $C_2$ sont couplées optiquement entre elles de manière à ce que les régions de coeur 10 et annulaires 20 d'un coupleur soient couplées optiquement aux régions correspondantes de l'autre coupleur. Les deux coupleurs $C_1$ et $C_2$, ont donc même axe optique △ confondus avec l'axe de rotation du joint tournant Jt.

La structure guidante annulaire joue donc le rôle de coupleur étoile pour établir des liaisons conversationnelles entre les émetteurs – récepteurs $E_i/R_i$, l'émetteur $E_C$ et le récepteur $R_C$.

Outre ces liaisons qui sont en grande partie analogues à celles réalisées dans le système décrit dans les divulgations précitées, les coupleurs $C_1$ et $C_2$ permettent d'étalir une liaison supplémentaire, du type point à point, à très haut débit par la structure guidante centrale entre un émetteur $E_0$, situé dans l'exemple illustré dans l'ensemble mobile UM, et un récepteur $R_0$, situé dans le calculateur central CC.

Cette disposition n'est évidemment pas limitative. La transmission pourrait s'effectuer en sens inverse. On pourrait également prévoir une liaison bidirectionnelle.

Dans l'ensemble mobile UM, l'émetteur $E_0$ est couplé optiquement à une des extrémités d'une fibre optique $FE_0$ dont l'autre extrémité est couplée à la région de coeur de la structure guidante centrale du coupleur $C_2$.

De la même manière, dans l'ensemble fixe UF, le récepteur $R_0$ est couplé optiquement à une extrémité d'une fibre optique $FR_0$ dont l'autre est couplée optiquement à la région de coeur de la structure guidante centrale du coupleur $C_1$.

Dans le but de fixer les idées, on va maintenant préciser la nature des éléments optoélectroniques utilisés dans le cadre du système de transmission décrit.

On peut considérer que la puissance optique émise par le calculateur central CC fixe n'est pas limitée. En effet, on dispose de toute l'énergie dont on peut avoir besoin sans restriction de volume. Aussi on utilise deux composants distincts comme émetteur : $E_C$ et comme récepteur : $R_C$. L'émetteur $E_C$ peut être un laser semi – conducteur et, par exemple non limitatif, une source laser à semi – conducteur du type Gallium – Aluminium – Arsenic (GA Al As). Le récepteur $R_0$ peut être une photo – diode PIN au silicium ou un transistor à effet de champ du type PINFET.

Dans l'unité mobile UM, il y a lieu de n'utiliser, comme il a été décrit, qu'une fibre optique par unité périphérique qui assure la liaison bidirectionnelle entre un terminal périphérique et le coupleur optique $C_2$. On couple optiquement cette fibre à un composant $E_i/R_i$ de type capable de fonctionner en émetteur et en détecteur de lumière de la même longueur d'onde, alternativement. Ce composant est de préférence une diode semicon – ductrice décrite dans la demande de brevet fran – çais FR – A – 2 396 419 concernant une diode se – miconductrice qui, polarisée dans le sens direct, émet de la lumière et qui, polarisée en inverse, est susceptible de détecter de la lumière. Cette dis – position particulière permet également de doubler la puissance optique reçue par rapport à la solution consistant à utiliser un émetteur et un récepteur de lumière distincts, ainsi que deux fibres optiques par terminal périphérique.

On peut établir de cette manière des tran – smissions de type conversationnelles numériques à une cadence de 10 Mb/s.

En ce qui concerne la liaison du type point à point, on peut établir, par exemple, des transmis – sions de bande passante 10 MHz avec une fré – quence porteuse allant jusque 1 GHz.

Pour ce faire, l'émetteur $E_0$ est de préférence une diode laser à double heterojonction à gain guidé de type Gallium – Aluminium/Gallium – Alu – minium – Arsenic (Ga Al/Ga Al As).

Le récepteur $R_0$ pour sa part est de préférence un photodiode au silicium du type à avalanche.

En ce qui concerne sa structure mécanique le joint tournant Jt, qui incorpore deux coupleurs $C_1$ et $C_2$ selon l'invention peut être de tout type ap – proprié. Sa fonction est classiquement de mettre en rotation relative ces deux coupleurs $C_1$ et $C_2$ autour d'un axe $\Delta$ tout en maintenant un aligne – ment suffisant des zones à coupler, c'est – à – dire les régions 10 et 20, dans lesquelles se propagent les ondes guidées.

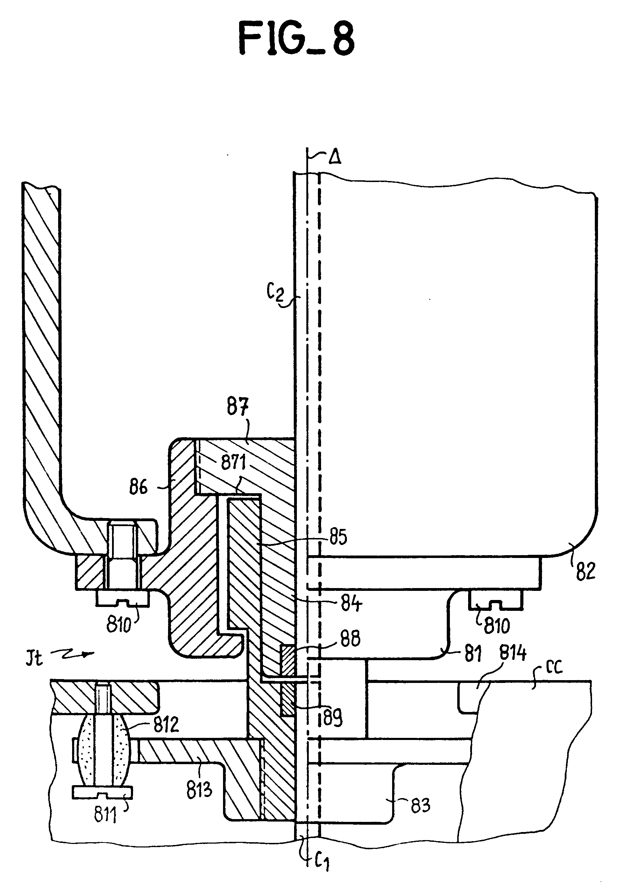

Ce joint Jt tournant peut être d'un type analo – gue à celui décrit dans la demande de brevet français FR – A – 2 248 728. Un tel joint tournant est illustré par la figure 8. Il comporte un embout mâle 81 et un embout femelle 83 agencés pour former un arbre 84 tournant dans un manchon 85 selon un ajustement déterminé, un dispositif de butées 86 – 861 et 87 – 871 délimitant le déplace – ment axial du manchon, des moyens de centrage 88 et 89 des extrémités des coupleurs $C_1$ et $C_2$ et des moyens de fixation aux corps extérieurs constitués, d'une part, par un plateau fixe 814, compris par exemple dans le châssis du calcula – teur central CC et, d'autre part, par l'arbre d'en – traînement 82 de l'ensemble mobile UM (figure 7). Ces moyens de fixation forment respectivement un couplage rigide 810 et semi – rigide : 811, 812 et 813. Ce joint tournant Jt assure seulement la jonction optique rotative d'axe $\Delta$ entre les ensem – bles fixes UF et mobile UM. Des moyens supplé – mentaires non représentés assurent le couplage mécanique entre l'arbre d'entraînement 82 et l'en – semble fixe UM. Ce sont ces moyens qui doivent notamment supporter le poids de l'ensemble mo – bile UM et de son arbre d'entraînement 82.

## Revendications

1. Joint tournant pour des liaisons par fibres op – tiques ($F_i$, $FFR_c$, $FR_0$) entre des premier (UF) et second (UM) ensembles en mouvement de rotation relatif autour d,un axe ($\Delta$), caractérisé en ce qu'il comprend des premier ($C_1$) et second ($C_2$) dispositifs coupleurs optiques cylindriques comprenant chacun une première structure guidante (1) comportant une première (10) et une seconde (20) régions coaxiales s'étendant parallèlement à l'axe de symétrie ($\Delta$) dudit dispositif coupleur, la première région (10) étant destinée à être couplée à une liaison unique par fibre optique ($FE_0$), par au moins une face terminale orthogonale audit axe ($\Delta$), la seconde région (11) entourant cette pre – mière région et formant gaine optique ; et une seconde structure guidante (2) disposée en périphérie comprenant des troisième et qua – trième (21) régions annulaires, la troisième région (20) formant un coupleur étoile, par au moins une face terminale annulaire orthogo – nale audit axe, pour plusieurs liaisons à fibres optiques ($F_i$), la quatrième région (21) entou – rant cette troisième région (20) et formant gaine optique ; ces coupleurs ayant des axes de symétrie communs audit axe de rotation ($\Delta$) et disposés de manière à ce que les première régions (10) et les troisièmes régions (20) de chacun desdits coupleurs ($C_1$, $C_2$) soient cou – plés optiquement entre elles par une de leurs faces terminales, orthogonales à l'axe de ro – tation ($\Delta$), les premier ($C_1$) et second ($C_2$) coupleurs optiques étant couplés mécanique – ment chacun à un desdits premier (UF) et second (UM) ensembles.

2. Dispositif selon la revendication 1, caractérisé en ce que les indices de réfraction optique associés aux matériaux constituant les pre – mière (10), deuxième (11), troisième (20) et quatrième (21) régions étant respectivement $n_{10}$, $n_{11}$, $n_{20}$ et $n_{21}$, ces indices de réfraction sont constants pour chaque région et en ce que lesdits indices de réfraction satisfont si – multanément les relations :

$$n_{10} > n_{20} > n_{11} > 1$$
$$\text{et } n_{10} > n_{20} > n_{21} > 1$$

3. Dispositif selon la revendication 1, caractérisé en ce que les indices de réfraction optique associés aux matériaux constituant les deuxième (11), troisième (20) et quatrième (21) régions étant respectivement $n_{11}$, $n_{20}$ et $n_{21}$, la première région (10) étant un barreau à gradient d'indice, son indice de réfraction ayant une valeur maximale $n'_{10}$, et les indices de réfraction $n_{11}$, $n_{20}$ et $n_{21}$ sont des valeurs constantes pour chaque région et en ce que lesdits indices de réfraction satisfont simulta‑nément les relations :

$$n'_{10} > n_{20} > n_{11} > 1$$
$$\text{et } n'_{10} > n_{20} > n_{21} > 1$$

## Claims

1. A rotary joint for connections by optical fibres ($F_i$, $FFR_c$, $FR_0$) between first (UF) and second (UM) units in relative rotational movement about an axis ($\triangle$), characterised in that it comprises first ($C_1$) and second ($C_2$) cylindrical optical coupling devices, each comprising a first guiding structure (1) comprising a first (10) and a second (20) coaxial region extending parallel to the axis of symmetry ($\triangle$) of said coupling device, the first region (10) being intended to be coupled to a single connection by optical fibre ($FE_0$, by at least one end face orthogonal to said axis ($\triangle$), the second region (11) surrounding this first region and forming an optical sheath; and a second guiding structure (2) arranged peripherally, comprising third and fourth (21) annular regions, the third region (20) forming a star coupler, by at least one annular end face orthogonal to said axis, for a plurality of connections to optical fibres ($F_i$), the fourth region (21) surrounding this third region (20) and forming an optical sheath; these couplers having axes of symmetry common to said axis of rotation ($\triangle$) and ar‑ranged such that the first regions (10) and the third regions (20) of each of said couplers ($C_1$, $C_2$) are coupled optically between them by one of their end faces, orthogonal to the axis of rotation ($\triangle$), the first ($C_1$) and second ($C_2$) optical couplers each being coupled me‑chanically to one of said first (UF) and second (UM) units.

2. A device according to Claim 1, characterised in that, the optical refractive indices associated with the materials constituting the first (10), second (11), third (20) and fourth (21) regions being respectively $n_{10}$, $n_{11}$, $n_{20}$ and $n_{21}$, these refractive indices are constant for each region and in that said refraction indices at the same time satisfy the relationships:

$$n_{10} > n_{20} > n_{11} > 1$$
$$\text{and } n_{10} > n_{20} > n_{21} > 1$$

3. A device according to Claim 1, characterised in that, the optical refractive indices associated with the materials constituting the second (11), third (20) and fourth (21) regions being respectively $n_{11}$, $n_{20}$ and $n_{21}$, the first region (10) being an index gradient bar, its refractive index having a maximum value $n'_{10}$, and the refractive indices $n_{11}$, $n_{20}$ and $n_{21}$ are constant values for each region and in that said refrac‑tive indices at the same time satisfy the rela‑tionships:

$$n'_{10} > n_{20} > n_{11} > 1$$
$$\text{and } n'_{10} > n_{20} > n_{21} > 1$$

## Patentansprüche

1. Drehkupplung für Lichtleitfaserverbindungen ($F_i$, $FFR_C$, $FR_0$) zwischen ersten (UF) und zweiten Einheiten (UM), die sich relativ zuein‑ander um eine Achse ($\triangle$) drehen können, da‑durch gekennzeichnet, daß sie erste ($C_1$) und zweite zylindrische optische Koppelvorrich‑tungen ($C_2$) enthält, die je eine erste lichtlei‑tende Struktur (1) mit einer ersten (10) und einer zweiten koaxialen Zone (11) besitzen, welche sich parallel zur Symmetrieachse ($\triangle$) der Koppelvorrichtung erstrecken, wobei die erste Zone (10) mit einer einzigen Lichtleitfaser ($FE_0$) über mindestens eine zur Achse ($\triangle$) senkrechte Stirnseite gekoppelt werden soll, während die zweite Zone (11) diese erste Zone umgibt und eine optische Hülle bildet, und eine zweite lichtleitende Struktur (2) auf‑weist, die an der Peripherie angeordnet ist und dritte und vierte ringförmige Zonen (21) ent‑hält, wobei die dritte Zone (20) einen Stern‑koppler über mindestens eine ringförmige und senkrecht zur Achse liegende Stirnseite für mehrere Lichtleitfaserverbindungen ($F_i$) bildet, während die vierte Zone (21) diese dritte Zone (20) umgibt und eine optische Hülle bildet, wobei die Koppler eine gemeinsame Symme‑trieachse, nämlich die Drehachse ($\triangle$) besitzen und so angeordnet sind, daß die ersten Zonen (10) und die dritten Zonen (20) der beiden Koppler ($C_1$, $C_2$) optisch miteinander über ihre zur Drehachse ($\triangle$) senkrecht liegenden Stirn‑flächen gekoppelt sind und der erste optische Koppler ($C_1$) und der zweite optische Koppler ($C_2$) mechanisch mit der ersten bzw. zweiten Einheit (UF, UM) gekoppelt sind.

2. Vorrichtung nach Anspruch 1, dadurch ge‑kennzeichnet, daß die Brechungsindices, die den die erste (10), die zweite (11), die dritte (20) und die vierte Zone (21) bildenden Mate‑rialien zugewiesen sind und die Werte $n_{10}$,

$n_{11}$, $n_{20}$, $n_{21}$ tragen, für jede Zone konstant sind und daß diese Brechungsindices zugleich die folgenden Beziehungen erfüllen:

$$n_{10} > n_{20} > n_{11} > 1$$
$$\text{und } n_{10} > n_{20} > n_{21} > 1$$

3. Vorrichtung nach Anspruch 1, dadurch gekennzeichnet, daß die Brechungsindices der Materialien der zweiten (11), dritten (20) und vierten Zone (21) den Wert $n_{11}$, $n_{20}$ und $n_{21}$ besitzen und die erste Zone (10) ein Stab mit einem Indexgradienten ist, dessen Brechungsindex einen Höchstwert $n'_{10}$ besitzt, und daß die Brechungsindices ($n_{11}$, $n_{20}$ und $n_{21}$ für jede Zone konstante Wert sind und daß die Brechungsindices zugleich folgende Beziehungen erfüllen:

$$n'_{10} > n_{20} > n_{11} > 1$$
$$\text{und } n'_{10} > n_{20} > n_{21} > 1$$

FIG_1

FIG_2

FIG_3

FIG_4

FIG_5

FIG_6

# FIG_7

# FIG_8